# EUROPEAN PATENT SPECIFICATION

(11) **EP 3 874 640 B1**
(45) Date of publication and mention of the grant of the patent: **23.10.2024**
(21) Application number: 19880113.6
(22) Date of filing: 31.10.2019
(51) Int. Cl.: H04L 1/1607, H04L 1/08, H04B 17/309

(54) **ENERGY DETECTION INDICATOR**
ENERGIEDETEKTIONSANZEIGER
INDICATEUR DE DÉTECTION D'ÉNERGIE

(30) Priority: 02.11.2018 US 201862755007 P
(43) Date of publication of application: 08.09.2021
(73) Proprietor: TELEFONAKTIEBOLAGET LM ERICSSON (PUBL), 164 83 Stockholm (SE)
(72) Inventor: GERAMI, Majid, 224 73 Lund (SE); SINGH, Bikramjit, 02880 Kirkkonummi (FI); BLANKENSHIP, Yufei, Kildeer, IL 60047 (US); FRÖBERG OLSSON, Jonas, 590 74 Ljungsbro (SE); KITTICHOKECHAI, Kittipong, 177 63 Järfälla (SE)
(74) Representative: Ericsson
(86) International application number: PCT/SE2019/051095
(87) International publication number: WO 2020/091681

(56) References cited:
- EP-A1- 3 136 640
- WO-A1-2018/172862
- US-A1- 2011 044 196
- LG ELECTRONICS: "Discussion on evaluation methodology for reliability", vol. RAN WG1, no. Gothenburg, Sweden; 20180820 - 20180824, 11 August 2018 (2018-08-11), XP051515913, Retrieved from the Internet <URL:http://www.3gpp.org/ftp/tsg%5Fran/WG1%5FRL1/TSGR1%5F94/Docs/R1%2D1808535%2Ezip> [retrieved on 20180811]
- PANASONIC: "UL HARQ behaviour with dynamic adaptive/non-adaptive operation", 3GPP DRAFT; R2-074854, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137360
- PANASONIC: "Clear Channel Assessment for UL Transmissions", 3GPP TSG-RAN WG1 MEETING 84, R1-160793, 15 February 2016 (2016-02-15), St Julian's, Malta, XP051054120
- LG ELECTRONICS: "UL shared channel UE behaviour after ACK/NACK detection and UL synchronous", 3GPP TSG RAN WG1 #51 BIS, R1-080277, 14 January 2008 (2008-01-14), Sevilla, Spain, XP050108799
- LG ELECTRONICS: "On the UE behaviour related to UL synchronous HARQ procedure", 3GPP TSG RAN WG1 #51, R1-074748, 5 November 2007 (2007-11-05), Jeju, Korea, XP050108219
- LG ELECTRONICS: "Modifications on UL synchronous HARQ procedure", 3GPP TSG RAN WG1 #49BIS, R1-072883, 25 June 2007 (2007-06-25), Orlando, US, XP050106562

## Description

### TECHNICAL FIELD

The present disclosure relates to wireless communications, and in particular, to an energy detection indicator.

### BACKGROUND

In Third Generation Partnership Project (3GPP) New Radio (NR), also referred to as "5G", a slot may be defined to be 14 symbols and a subframe may be 1 millisecond (ms). The length of a subframe may hence be as in Long Term Evolution (LTE); however, depending of numerology the number of slots per subframe can vary in NR. On carrier frequencies below 6 GHz the numerologies 15 kHz and 30 kHz Sub-Carrier Spacing (SCS) can be supported while 60 kHz SCS may be optional for a wireless device (WD), such as a user equipment (UE). The 15 kHz SCS may be equal to the LTE numerology for normal cyclic prefix.

Downlink control information (DCI) is transmitted over a Physical Downlink Control Channel (PDCCH) and is blindly searched for by the WD. The search performed by the WD may involve one or more decoding attempts that are performed based on a hypothetical PDCCH located in pre-defined time-frequency locations, called search space entry. The set of time-frequency locations where a PDCCH may be received may be called a search space. In NR, the region of frequency resources within a slot wherein the search space is defined can be called Control Region Set (CORESET) and can be configured very flexibly. A WD can have several CORESETs configured. The search space for a CORESET may further include multiple time-locations where PDCCH is monitored.

NR may further support two types of transmissions, Type A and Type B. Type A transmissions may be slot-based, where a slot is defined as 14 orthogonal frequency division multiplexed (OFDM) symbols, while Type B is non-slot-based. The purpose of Type B may be to enable making short transmissions that can start and end more flexibly than Type A. Mini-slot transmissions can be dynamically scheduled and in 3GPP Release 15 (Rel-15). For example, mini-slots may:
- be of length 7, 4, or 2 symbols in downlink (DL) and uplink (UL); and
- start and end within in any symbol within a slot.

Although NR can support flexible starts and ends of mini-slot transmissions it may be convenient from a scheduling perspective to define transmission time intervals (TTIs) and keep transmissions within a TTI. For the DL, i.e., network node to wireless device, it may be convenient to define PDCCH monitoring occasions at regular time instances and to keep DL transmissions between two consecutive monitoring occasions.

Type B transmissions may reduce latency for Ultra-Reliable Low-Latency Communication (URLLC). The transmissions can be scheduled and start sooner than for slot-based transmissions where scheduling and transmissions wait until the next slot.

NR can support two types of configured grants, Type 1 and Type 2. For Type 1, the WD may be radio resource control (RRC) configured with a grant that indicates the required transmission parameters; while for Type 2 the configured grant may be partly RRC configured and partly L1 signaled (e.g., DCI signaling). For a Type 2 configured grant, the resource allocation may follow an UL, i.e., from the wireless device to the network node, grant received on the DCI and the resource then recurs periodically, where the period is configured by RRC. The UL grant may have a time domain resource assignment field that provides a row index of a higher layer configured table e.g., pusch-symbolAllocation, where the indexed row defines the slot offset K2, the start and length indicator SLIV, and the physical uplink shared channel (PUSCH) mapping type to be applied in the PUSCH transmission. The WD may transmit a Medium Access Control-Control Element (MAC-CE) confirm message when the configured grant is activated or deactivated.

A configured grant can use one or more Hybrid Automatic Repeat reQuest (HARQ) processes. In the configuration of the configured grant the number of HARQ processes may be specified as well as a configuredGrantTime, which can take values of one or more periods P. The HARQ process ID may be determined by for example 3GPP Technical Specification (TS) 38.321, v15.2.0, Section 5.4.1, as follows:
- For configured uplink grants, the HARQ Process ID associated with the first symbol of a UL transmission is derived from the following equation: HARQ Process ID = [floor(CURRENT_symbol/periodicity)] modulo nrofHARQ-Processes, where CURRENT _symbol=(SFN × *numberOfSlotsPerFrame* × *numberOfSymbolsPerSlot* + slot number in the frame × *numberOfSymbolsPerSlot* + symbol number in the slot), and *numberOfSlotsPerFrame* and *numberOfSymbolsPerSlot* refer to the number of consecutive slots per frame and the number of consecutive symbols per slot, respectively as specified in 3GPP TS 38.211.

To improve reliability in uplink transmissions, HARQ-based retransmission may be a useful solution, if latency requirements allow for retransmission.

In NR 3GPP Rel-15 (with implicit HARQ ACK/NACK), it may be specified in the MAC spec that the WD starts a timer when a MAC protocol data unit (PDU) is sent on the configured grant and flushes the buffer for new data when that timer expires. In other words, the WD may assume an implicit HARQ ACK after the timer expires. A dynamic grant for retransmission can be sent before the timer expires. This retransmission grant may effectively serve as an HARQ NACK.

The RRC *ConfiguredGrantConfig* information element is defined in 3GPP TS 38.331, as shown below according to 3GPP TS 38.331, version 15.3.0.

### ConfiguredGrantConfig information element:

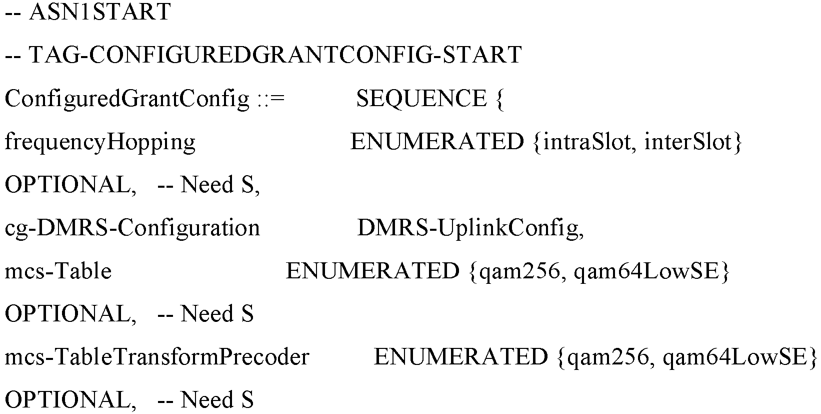

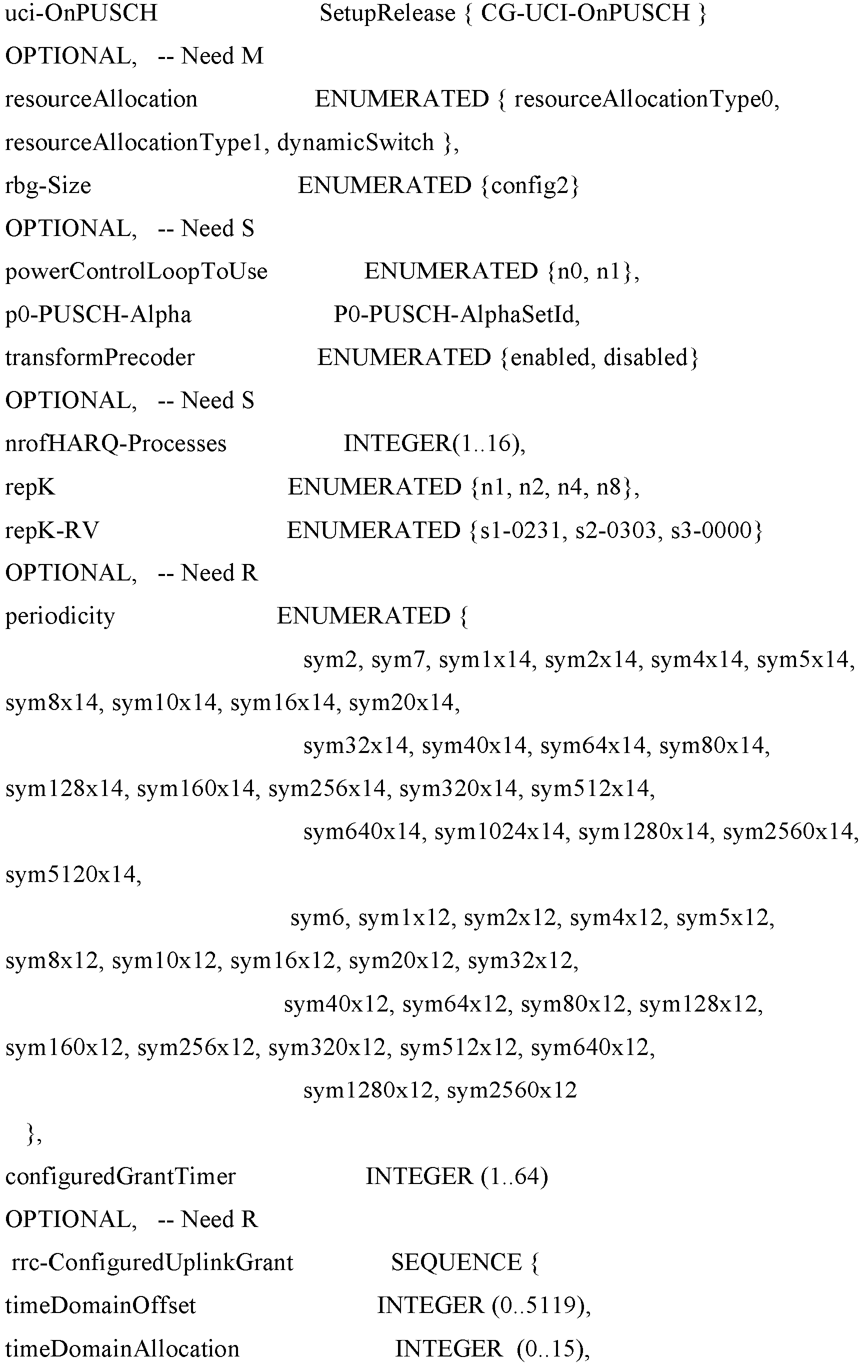

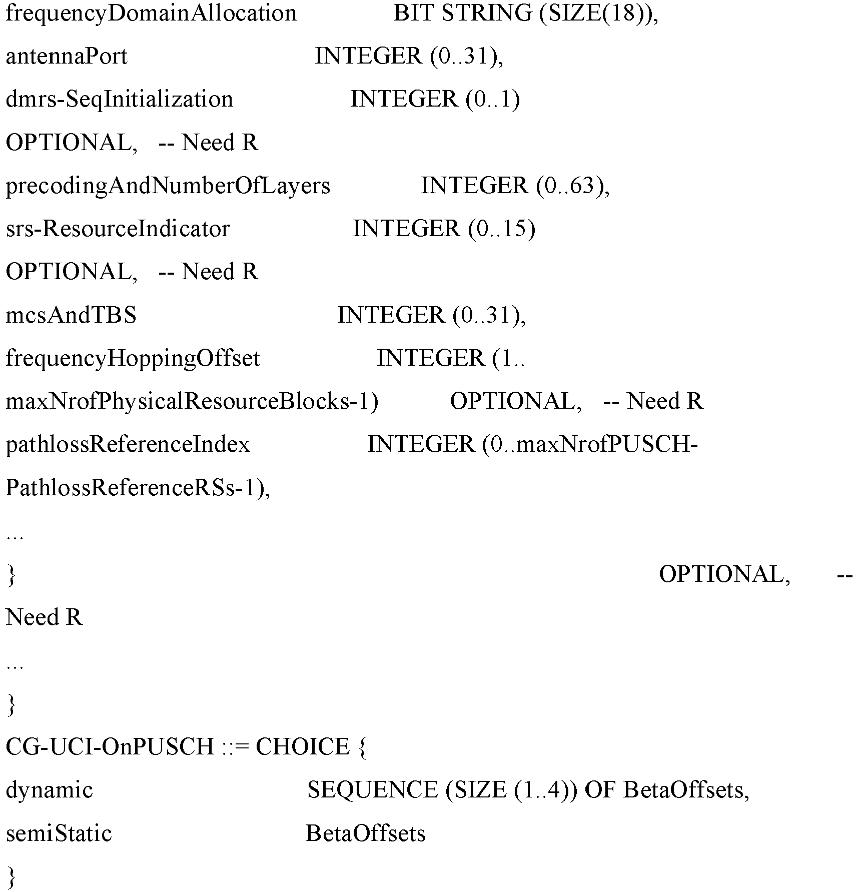

| ***ConfiguredGrantConfig field descriptions*** |
|---|
| ***antennaPort*** |
| Indicates the antenna port(s) to be used for this configuration, and the maximum bitwidth is 5. See TS 38.214, section 6.1.2, and TS 38.212, section 7.3.1. |
| ***cg-DMRS-Configuration*** |
| DMRS configuration, corresponds to L1 parameter 'UL-TWG-DMRS' (see TS 38.214, section 6.1.2). |
| ***configuredGrantTimer*** |
| Indicates the initial value of the configured grant timer (see TS 38.321,) in number of periodicities. |
| ***dmrs-SeqInitialization*** |
| The network configures this field if transformPrecoder is disabled. Otherwise the field is absent. |
| ***frequencyDomainAllocation*** |
| Indicates the frequency domain resource allocation, see TS 38.214, section 6.1.2, and TS 38.212, section 7.3.1). |
| ***frequencyHopping*** |
| The value *intraSlot* enables 'Intra-slot frequency hopping' and the value *interSlot* enables 'Inter-slot frequency hopping'. If the field is absent, frequency hopping is not configured. |
| ***frequencyHoppingOffset*** |
| Enables intra-slot frequency hopping with the given frequency hopping offset. Frequency hopping offset used when frequency hopping is enabled. Corresponds to L1 parameter 'Frequency-hopping-offset' (see TS 38.214, section 6.1.2). |
| ***mcs-Table*** |
| Indicates the MCS table the UE shall use for PUSCH without transform precoding. If the field is absent the UE applies the value 64QAM. |
| ***mcs-TableTransformPrecoder*** |
| Indicates the MCS table the UE shall use for PUSCH with transform precoding. If the field is absent the UE applies the value 64QAM. |
| ***mcsAndTBS*** |
| The modulation order, target code rate and TB size (see TS38.214, section 6.1.2). The NW does not configure the values 28~31 in this version of the specification. |
| ***nrofHARQ-Processes*** |
| The number of HARQ processes configured. It applies for both Type 1 and Type 2. See TS 38.321, section 5.4.1. |
| ***p0-PUSCH-Alpha*** |
| Index of the P0-PUSCH-AlphaSet to be used for this configuration. |
| ***periodicity*** |
| Periodicity for UL transmission without UL grant for type 1 and type 2. Corresponds to L1 parameter 'UL-TWG-periodicity' (see TS 38.321, section 5.8.2). |
| The following periodicities are supported depending on the configured subcarrier spacing [symbols]: |
| 15kHz: 2, 7, n* 14, where n={1, 2, 4, 5, 8, 10, 16, 20, 32, 40, 64, 80, 128, 160, 320, 640} |
| 30kHz: 2, 7, n* 14, where n={1, 2, 4, 5, 8, 10, 16, 20, 32, 40, 64, 80, 128, 160, 256, 320, 640, 1280} |
| 60kHz with normal CP: 2, 7, n* 14, where n={ 1, 2, 4, 5, 8, 10, 16, 20, 32, 40, 64, 80, 128, 160, 256, 320, 512, 640, 1280, 2560} |
| 60kHz with ECP: 2, 6, n*12, where n={ 1, 2, 4, 5, 8, 10, 16, 20, 32, 40, 64, 80, 128, 160, 256, 320, 512, 640, 1280, 2560} |
| 120kHz: 2, 7, n* 14, where n={1, 2, 4, 5, 8, 10, 16,20, 32, 40, 64, 80, 128, 160, 256, 320, 512, 640, 1024, 1280, 2560, 5120} |
| (see 38.214, Table 6.1.2.3-1) |
| ***powerControlLoopTo Use*** |
| Closed control loop to apply. Corresponds to L1 parameter 'PUSCH-closed-loop-index' (see TS 38.213, section 7.7.1). |
| ***rbg-Size*** |
| Selection between configuration 1 and configuration 2 for RBG size for PUSCH. When the field is absent the UE applies the value config 1. The NW may only set the field to *config2* if *resourceAllocation* is set to *resourceAllocationType0* or *dynamicSwitch.* Note: rbg-Size is used when the transformPrecoder parameter is disabled. |
| ***repK-RV*** |
| The redundancy version (RV) sequence to use. See TS 38.214, section 6.1.2. The network configures this field if repetitions are used, i.e., if repK is set to n2, n4 or n8. Otherwise, the field is absent. |
| ***repK*** |
| The number or repetitions of K. |
| ***resourceAllocation*** |
| Configuration of resource allocation type 0 and resource allocation type 1. For Type 1 UL data transmission without grant, "resourceAllocation" should be resourceAllocationType0 or resourceAllocationType1. |
| ***rrc-Configured UplinkGrant*** |
| Configuration for "configured grant" transmission with fully RRC-configured UL grant (Type1). If this field is absent the UE uses UL grant configured by DCI addressed to CS-RNTI (Type2). Type 1 configured grant may be configured for UL or SUL, but not for both simultaneously. |
| ***srs-ResourceIndicator*** |
| Indicates the SRS resource to be used. |
| ***timeDomainAllocation*** |
| Indicates a combination of start symbol and length and PUSCH mapping type, see TS 38.214, section 6.1.2 and TS 38.212, section 7.3.1. |
| ***timeDomainOffset*** |
| Offset related to SFN=0, see TS 38.321, section 5.8.2. |
| ***transformPrecoder*** |
| Enables or disables transform precoding for type 1 and type2. If the field is absent, the UE enables or disables transform precoding in accordance with the field msg3-transformPrecoder in RACH-ConfigCommon, see 38.214, section 6.1.3. |
| ***uci-OnPUSCH*** |
| Selection between and configuration of dynamic and semi-static beta-offset. For Type 1 UL data transmission without grant, *uci-OnPUSCH* should be set to *semiStatic.* |

However, there may be problems with implicit HARQ acknowledgements, where, for example, the WD may not be able to determine which of at least two cases is occurring, e.g., whether a lack of HARQ feedback from the network node indicates an implicit HARQ ACK or whether the network node is unaware that an UL transmission was even sent by the WD.

3GPP document with a title "Discussion on evaluation methodology for reliability" defines that before decoding PUSCH at gNB, the gNB has to detect PUSCH transmission by detecting DMRS or energy of PUSCH transmission.

### SUMMARY

The invention is defined by a method implemented in a network node according to claim 1, a method implemented in a wireless device according to claim 4, a network node according to claim 10 and a wireless device according to claim 11. Further details are defined by claims 2, 3 and 5-9.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a block diagram of a location assurance system including a location assurance gateway, a network node, and a user equipment (UE), according to one embodiment of the present disclosure;
FIG. 2 is a flowchart of an exemplary method for a gateway according to one embodiment of the present disclosure;
FIG. 3 is a flowchart of an exemplary method for a network node according to one embodiment of the present disclosure;
FIG. 4 is a flowchart of an exemplary method for a UE according to one embodiment of the present disclosure;
FIG. 5 is a schematic diagram illustrating a short-message service-cell broadcast (SMS-CB) of location specific codes according to one embodiment of the present disclosure;
FIG. 6 is a schematic diagram of an exemplary location assurance gateway implemented at a data center according to one embodiment of the present disclosure;
FIG. 7 is a flow diagram illustrating an exemplary data location assurance message flow according to one embodiment of the present disclosure;
FIG. 8 is flow diagram illustrating yet another exemplary data location assurance message flow according to an alternative embodiment of the present disclosure;
FIG. 9 is a schematic diagram illustrating an exemplary location-aware KSI gateway implemented within a data center according to one embodiment of the present disclosure;
FIG. 10 is a flow diagram illustrating an exemplary location-aware digital signal signing message flow according to one embodiment of the present disclosure; and
FIG. 11 is a flowchart of an example wireless device decision-making process based on the received signals from a network node.

### DETAILED DESCRIPTION

In some embodiments, a configured grant occurs periodically, and therefore, it may not be efficient for MAC to send a packet if the buffer is empty. Thus, a skip uplink transmission mechanism may be used, that may advantageously save energy and/or reduce interference.

However, this can lead to an error case that might be relevant for fulfilling a very demanding Ultra-reliable Low Latency Communication (URLLC) requirement, such as 10-6. One problem is that the WD may not be able to distinguish between two cases, since in both cases the WD does not receive any response from the network node (e.g., gNB). The two cases may be as follows:
- Case 1. MAC PDU is received at the network node (e.g., gNB) and the network node correctly decodes the transport carrying the MAC PDU. In 3GPP Rel-15 NR, the network node (e.g., gNB) does not send any HARQ-ACK feedback. In 3GPP Rel-15, the only possible feedback to send from gNB is a re-transmission of the DL grant if the transport block is not decoded correctly.
- Case 2. MAC PDU is not received correctly by the network node (e.g., gNB), where even energy is not detected at the network node. In this case, the network node is not aware that the WD attempted an uplink transmission on that configured UL grant, and does not respond with a re-transmission DL grant.

If an explicit HARQ feedback (or more precisely, HARQ ACK is needed since HARQ NACK is already implicitly defined via the re-transmission DL grant) is introduced, then it can increase resource usage of the DL DCI. Since the target Block Error Rate (BLER) for URLLC is 10⁻⁵-10⁻⁶, most of the transmissions are successful and introducing explicit HARQ ACK can introduce a high signaling load. For example, for BLER=10⁻⁶, after 1000,000 transport block (TB) transmissions, an average network node may send 999,999 HARQ-ACK but only one NACK. Instead of transmitting HARQ-ACK, which is for Case 1, some embodiments of this disclosure propose sending a signal for Case 2, which could have lower occurrence and therefore a lower signaling load than HARQ ACK.

Some embodiments introduce a new downlink control signaling arrangement, which may be called energy_detection_indicator, and which can be transmitted to the WD for a configured grant transmission. The energy_detection_indicator may be one bit of information which comes out of the energy-detection process over the assigned resources for an uplink's configured grant transmission. In one example, the signaling is sent to the WD through the next available DCI. In another example, the signaling is sent where a separate/common physical downlink shared channel (PDSCH) resource can be allocated for the signaling transmission. In some embodiments, the techniques in this disclosure allow the energy_detection_indicator to be sent occasionally, only when the detected energy is less than a pre-defined threshold. This occasional transmission can reduce the load of the added signaling as compared to existing techniques. Accordingly, some embodiments of this disclosure may improve the reliability of uplink configured grant transmissions.

Before describing in detail exemplary embodiments, it is noted that the embodiments reside primarily in combinations of apparatus components and processing steps related to an energy detection indicator. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSRBS, multi-cell/multicast coordination entity (MCE), relay node, integrated access and backhaul (IAB) node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, IAB node, access point, radio access point, Remote Radio Unit (RRU) Remote Radio Head (RRH).

Even though the descriptions herein may be explained in the context of one of a Downlink (DL) and an Uplink (UL) communication, it should be understood that the basic principles disclosed may also be applicable to the other of the one of the DL and the UL communication. In some embodiments in this disclosure, the principles may be considered applicable to a transmitter and a receiver using HARQ feedback schemes/mechanisms.

Any two or more embodiments described in this disclosure may be combined in any way with each other.

The term "resource", as used herein, is intended to be interpreted in a general way. It may indicate an arbitrary or predetermined combination of subcarriers, time slots, mini-slots, symbols, codes and/or spatial dimensions.

The allocation/assignment of radio resources to the at least one wireless device for communications may be interpreted as the set of resources for use for the at least one wireless device, that have been configured, e.g., preconfigured, by the network node. The radio resources comprised in the allocation/assignment may be referred to herein as the assigned resources to the at least one wireless device. In some embodiments, the assigned resources are configured by higher layers, such as RRC, for UL transmissions. In other embodiments, the assigned resources may the assigned or configured in other ways.

In some embodiments, energy detection may include detecting power-related or energy-related or amplitude-related or phase-related or signal strength-related aspects of a signal or resources.

In some embodiments, information on one or more resources may be considered to be transmitted in a message having a specific format. A message may comprise or represent bits representing payload information and coding bits, e.g., for error coding.

In some embodiments, receiving (or obtaining) information may comprise receiving one or more information messages (e.g., energy detection indictor or re-transmission). It may be considered that receiving signaling or messages comprises demodulating and/or decoding and/or detecting one or more messages, in particular a message carried by the signaling, e.g. based on an assumed set of resources, which may be searched and/or listened for. It may be assumed that both sides of the communication are aware of the configurations, and may determine the set of resources. In some embodiments, energy detection may be performed e.g., by network node even before demodulation and/or decoding a potential message is attempted.

An indication (e.g., an energy detection indication etc.) generally may explicitly and/or implicitly indicate the information it represents and/or indicates. Implicit indication may for example be based on position and/or resource used for transmission. Explicit indication may for example be based on a parametrization with one or more parameters, and/or one or more index or indices corresponding to a table, and/or one or more bit patterns representing the information.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

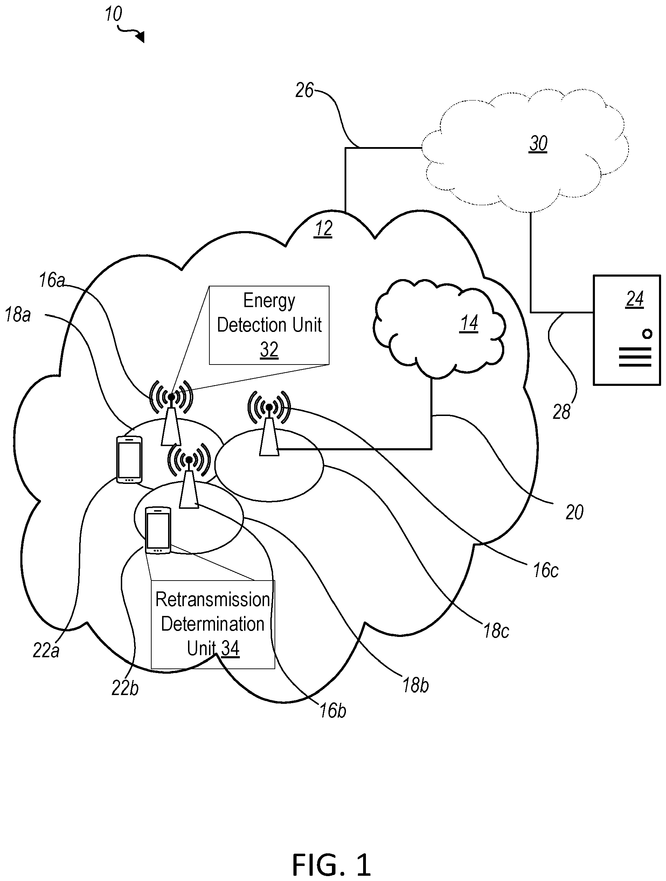

Referring now to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 1 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include an energy detection unit 32 which is configured to perform energy detection on assigned resources corresponding to a configured uplink grant. In some embodiments, the energy detection unit 32 may be configured to, based on a level of the detected energy, one of: send an energy detection indication corresponding to the assigned resources associated with the configured uplink grant; and demodulate and decode a transport block associated with the configured uplink grant.

A wireless device 22 is configured to include a re-transmission determination unit 34 which is configured to receive an energy detection indication corresponding to assigned resources associated with a configured uplink grant; and determine whether to perform an UL re-transmission based at least in part on the energy detection indication.

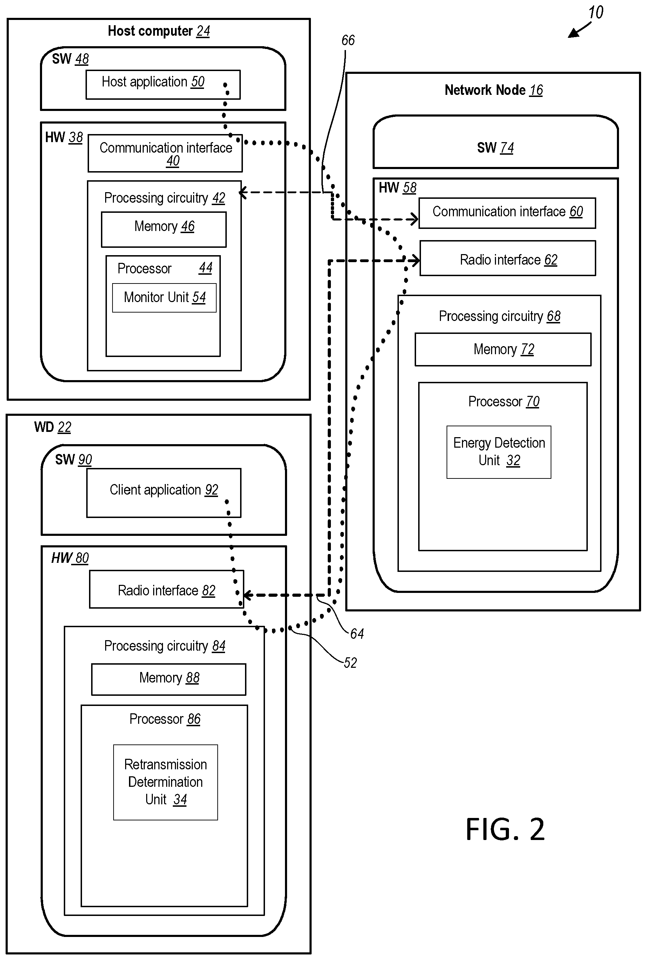

Example implementations, in accordance with an embodiment, of the WD 22, network node 16 and host computer 24 discussed in the preceding paragraphs will now be described with reference to FIG. 2. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and/or the wireless device 22. The processing circuitry 42 of the host computer 24 may include a monitor unit 54 configured to enable the service provider to observe, monitor, control, transmit to and/or receive from the network node 16 and/or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

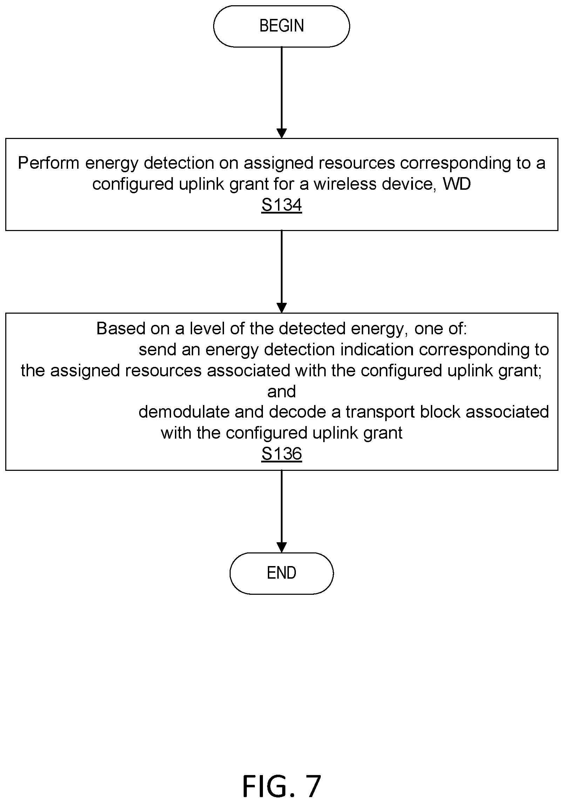

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16, such as the process described with reference to the flowchart in FIG. 7 and other figures. For example, processing circuitry 68 of the network node 16 may include energy detection unit 32 configured to perform energy detection on assigned resources corresponding to a configured uplink grant.

In some embodiments, the processing circuitry 68 and/or the energy detection unit 32 is further configured to communication an indication of a level of the detected energy to the wireless device as part of a HARQ feedback scheme. In some embodiments, the processing circuitry 68 and/or the energy detection unit 32 is further configured to at least one of: determine whether the detected energy is less than or equal to a pre-defined threshold value; determine whether or not to communicate an indication of a level of the detected energy based on whether the detected energy is less than or equal to the pre-defined threshold value; and determine whether or not to demodulate and decode an uplink transmission on the assigned resources based on the level of the detected energy. In some embodiments, the processing circuitry 68 and/or the energy detection unit 32 is further configured to communication an indication of a level of the detected energy in a downlink control information (DCI) message. In some embodiments, the processing circuitry 68 and/or the energy detection unit 32 is further configured to perform the energy detection by being configured to perform a demodulation reference signal (DMRS) sequence detection.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

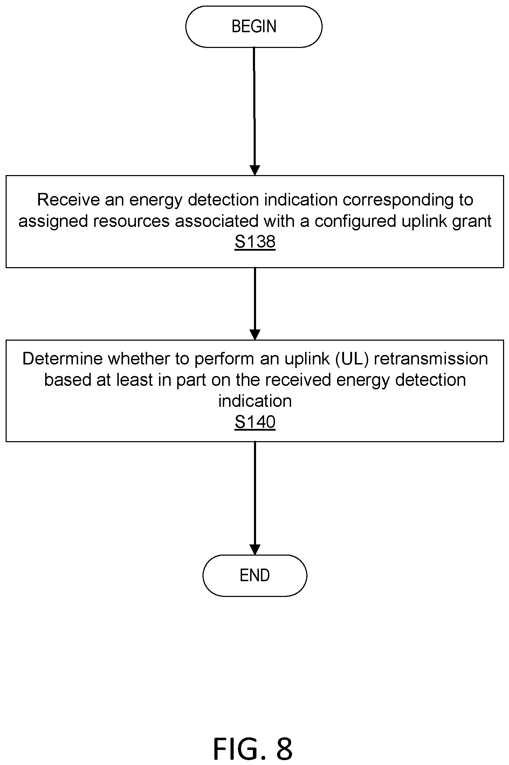

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22, such as the process described with reference to the flowchart in FIG. 8 and other figures. For example, the processing circuitry 84 of the wireless device 22 may include a re-transmission determination unit 34 configured to receive an energy detection indication corresponding to assigned resources associated with a configured uplink grant; and determine whether to perform an uplink (UL) re-transmission based at least in part on the energy detection indication.

In some embodiments, the energy detection indication indicates a level of energy detected by the network node 16 on the assigned resources as part of a HARQ feedback scheme. In some embodiments, the energy detection indication is received in a downlink control information (DCI) message. In some embodiments, the processing circuitry 68 and/or the energy detection unit 32 is configured to perform the UL re-transmission based on whether the energy detection indication indicates an energy level that is less than a pre-defined threshold value.

In some embodiments, the inner workings of the network node 16, WD 22, and host computer 24 may be as shown in FIG. 2 and independently, the surrounding network topology may be that of FIG. 1.

In FIG. 2, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 1 and 2 show various "units" such as energy detection unit 32, and re-transmission determination unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

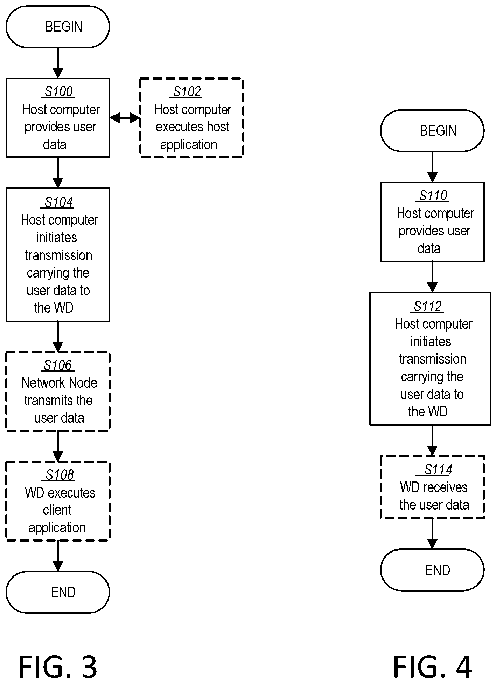

FIG. 3 is a flowchart illustrating an exemplary method implemented in a communication system, such as, for example, the communication system of FIGS. 1 and 2, in accordance with one embodiment. The communication system may include a host computer 24, a network node 16 and a WD 22, which may be those described with reference to FIG. 2. In a first step of the method, the host computer 24 provides user data (Block S 100). In an optional substep of the first step, the host computer 24 provides the user data by executing a host application, such as, for example, the host application 50 (Block S102). In a second step, the host computer 24 initiates a transmission carrying the user data to the WD 22 (Block S 104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S 108).

FIG. 4 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block 5112). The transmission may pass via the network node 16, in accordance with the teachings of the embodiments described throughout this disclosure. In an optional third step, the WD 22 receives the user data carried in the transmission (Block S 114).

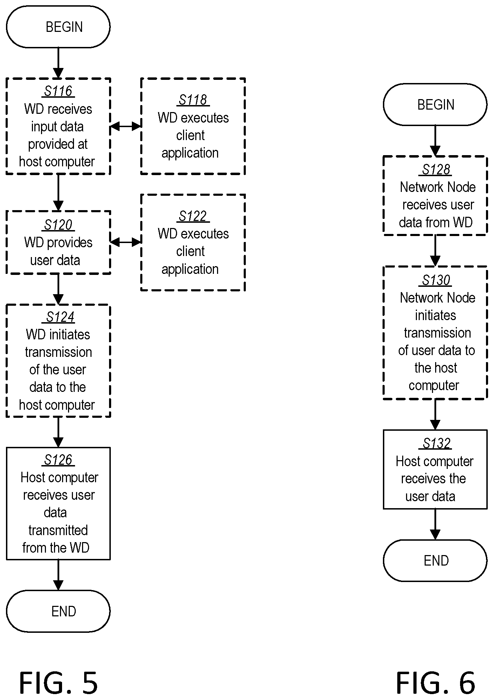

FIG. 5 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, the WD 22 receives input data provided by the host computer 24 (Block S1 16). In an optional substep of the first step, the WD 22 executes the client application 92, which provides the user data in reaction to the received input data provided by the host computer 24 (Block S 118). Additionally or alternatively, in an optional second step, the WD 22 provides user data (Block S120). In an optional substep of the second step, the WD provides the user data by executing a client application, such as, for example, client application 92 (Block S 122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 6 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S 130). In a third step, the host computer 24 receives the user data carried in the transmission initiated by the network node 16 (Block S132).

FIG. 7 is a flowchart of an exemplary process in a network node 16 for providing for an energy detection indicator according to some embodiments of this disclosure. One or more Blocks and/or functions performed by network node 16 may be performed by one or more elements of network node 16 such as by the energy detection unit 32 in processing circuitry 68, processor 70, radio interface 62, etc. The example process includes performing (Block 134), such as for example via the energy detection unit 32, processing circuitry 68, processor 70, communication interface 60 and/or radio interface 62, energy detection on assigned resources corresponding to a configured uplink grant for a wireless device 22. The process includes, based on a level of the detected energy, one of: sending (Block S 136), such as for example via the energy detection unit 32, processing circuitry 68, processor 70, communication interface 60 and/or radio interface 62, an energy detection indication corresponding to the assigned resources associated with the configured uplink grant; and demodulating and decoding, such as via the energy detection unit 32, processing circuitry 68, processor 70, communication interface 60 and/or radio interface 62, a transport block associated with the configured uplink grant.

In some embodiments, the method further includes if the transport block is correctly decoded, using an implicit hybrid automatic repeat request, HARQ, acknowledgement, ACK, scheme; and if the transport block is not correctly decoded, sending a dynamic grant for retransmission. In some embodiments, the dynamic grant for retransmission indicates to the wireless device a hybrid automatic repeat request, HARQ, non-acknowledgement, NACK, for the transport block. In some embodiments, based on the level of the detected energy, one of sending the energy detection indication and demodulating and decoding the transport block further including: if the level of the detected energy is less than a predefined threshold, sending, such as via the energy detection unit 32, processing circuitry 68, processor 70, communication interface 60 and/or radio interface 62, the energy detection indication corresponding to the assigned resources associated with the configured uplink grant; and if the level of the detected energy is at least equal to the predefined threshold, demodulating and decoding, such as via the energy detection unit 32, processing circuitry 68, processor 70, communication interface 60 and/or radio interface 62, the transport block associated with the configured uplink grant.

In some embodiments, the method further includes, as a result of sending the energy detection indication before a timer expires, receiving, such as via the energy detection unit 32, processing circuitry 68, processor 70, communication interface 60 and/or radio interface 62, a retransmission of the transport block from the WD 22. In some embodiments, the energy detection indication indicates to the WD 22 whether to retransmit data in a buffer. In some embodiments, sending the energy detection indication further includes sending, such as via the energy detection unit 32, processing circuitry 68, processor 70, communication interface 60 and/or radio interface 62, the energy detection indication in a downlink control information, DCI, message. In some embodiments, sending the energy detection indication in the DCI message further includes setting, such as via the energy detection unit 32, processing circuitry 68, processor 70, communication interface 60 and/or radio interface 62, at least one DCI field to a special value, the special value representing the energy detection indication.

In some embodiments, sending the energy detection indication further includes sending the energy detection indication in a group common downlink control information, DCI, message. In some embodiments, the energy detection indication in the group common DCI message includes at least one bitmap indicating energy detection in physical resource block, PRB, groups. In some embodiments, sending the energy detection indication further includes sending, such as via the energy detection unit 32, processing circuitry 68, processor 70, communication interface 60 and/or radio interface 62, the energy detection indication in a physical downlink shared channel, PDSCH.

In some embodiments, performing the energy detection on the assigned resources corresponding to the configured uplink grant further includes performing, such as via the energy detection unit 32, processing circuitry 68, processor 70, communication interface 60 and/or radio interface 62, a demodulation reference signal, DMRS, sequence detection on the assigned resources corresponding to the configured uplink grant, the DMRS sequence detection assuming that the wireless device has transmitted a physical uplink shared channel and an associated DMRS according to the configured uplink grant. In some embodiments, performing the energy detection on the assigned resources corresponding to the configured uplink grant further includes performing, such as via the energy detection unit 32, processing circuitry 68, processor 70, communication interface 60 and/or radio interface 62, the energy detection on the assigned resources based on a radio frequency signal detected on the assigned resources corresponding to the configured uplink grant.

In some embodiments, the method further includes communicating, such as for example via the energy detection unit 32 and/or the radio interface 62, an indication of a level of the detected energy to the wireless device as part of a HARQ feedback scheme. In some embodiments, the method further includes at least one of: determining, such as for example via the energy detection unit 32, whether the detected energy is less than or equal to a pre-defined threshold value; determining, such as for example via the energy detection unit 32, whether or not to communicate an indication of a level of the detected energy based on whether the detected energy is less than or equal to the pre-defined threshold value; and determining, such as for example via the energy detection unit 32, whether or not to demodulate and decode an uplink transmission on the assigned resources based on the level of the detected energy. In some embodiments, the method further includes communicating, such as for example via the energy detection unit 32 and/or the radio interface 62, an indication of a level of the detected energy in a downlink control information (DCI) message. In some embodiments, the performing the energy detection comprises performing, such as for example via the energy detection unit 32, a demodulation reference signal (DMRS) sequence detection.

FIG. 8 is a flowchart of an exemplary process in a wireless device 22 according to some embodiments of the present disclosure. One or more Blocks and/or functions performed by wireless device 22 may be performed by one or more elements of wireless device 22 such as by the retransmission determination unit 34 in processing circuitry 84, processor 86, radio interface 82, etc. The example method includes receiving (Block S 13 8), such as for example via radio interface 82, processing circuitry 84, processor 86 and/or retransmission determination unit 34, an energy detection indication corresponding to assigned resources associated with a configured uplink grant. The method includes determining (Block S 140), such as for example via the re-transmission determination unit 34, processing circuitry 84, processor 86 and/or radio interface 82, whether to perform an uplink (UL) re-transmission based at least in part on the energy detection indication.

In some embodiments, the method further includes determining, such as for example via the retransmission determination unit 34, processing circuitry 84, processor 86 and/or radio interface 82, whether data was transmitted in the assigned resources associated with the configured uplink grant, the uplink retransmission being conditioned on the data being transmitted in the assigned resources associated with the configured uplink grant. In some embodiments, the energy detection indication indicates a level of energy detected on the assigned resources associated with the configured uplink grant relative to a predefined threshold. In some embodiments, the method further includes if a dynamic grant for retransmission on resources associated with the configured uplink grant is received, retransmit on the resources based on the dynamic grant. In some embodiments, the dynamic grant for retransmission indicates to the wireless device 22 a hybrid automatic repeat request, HARQ, non-acknowledgement, NACK. In some embodiments, determining whether to perform the uplink retransmission based at least in part on the received energy detection indication further includes if the energy detection indication is received before a timer expires, assuming, such as for example via the re-transmission determination unit 34, processing circuitry 84, processor 86 and/or radio interface 82, hybrid automatic repeat request, HARQ, non-acknowledgement, NACK and performing the uplink retransmission. In some embodiments, if no energy detection indication is received before the timer expires, assuming, such as for example via the re-transmission determination unit 34, processing circuitry 84, processor 86 and/or radio interface 82, an implicit HARQ acknowledgement, ACK.

In some embodiments, the energy detection indication indicates to the WD 22 whether to retransmit data in a buffer. In some embodiments, receiving the energy detection indication further includes receiving, such as for example via the re-transmission determination unit 34, processing circuitry 84, processor 86 and/or radio interface 82, the energy detection indication in a downlink control information, DCI, message. In some embodiments, receiving the energy detection indication in the DCI message further includes receiving, such as for example via the re-transmission determination unit 34, processing circuitry 84, processor 86 and/or radio interface 82, at least one DCI field that is set to a special value, the special value representing the energy detection indication.

In some embodiments, receiving the energy detection indication further includes receiving, such as for example via the re-transmission determination unit 34, processing circuitry 84, processor 86 and/or radio interface 82, the energy detection indication in a group common downlink control information, DCI, message. In some embodiments, the energy detection indication in the group common DCI message includes at least one bitmap indicating energy detection in physical resource block, PRB, groups. In some embodiments, receiving the energy detection indication further includes receiving, such as for example via the re-transmission determination unit 34, processing circuitry 84, processor 86 and/or radio interface 82, the energy detection indication in a physical downlink shared channel, PDSCH.

In some embodiments, the energy detection indication indicates a level of energy detected by a network node on the assigned resources as part of a HARQ feedback scheme. In some embodiments, the energy detection indication is received in a downlink control information (DCI) message. In some embodiments, the method further includes performing, such as via the re-transmission determination unit 34, the UL re-transmission based on whether the energy detection indication indicates an energy level that is less than a pre-defined threshold value.

Having generally described some embodiments for an energy detection indicator, a more detailed description of some of the embodiments is described below, which may be implemented by network node 16 and/or wireless device 22.

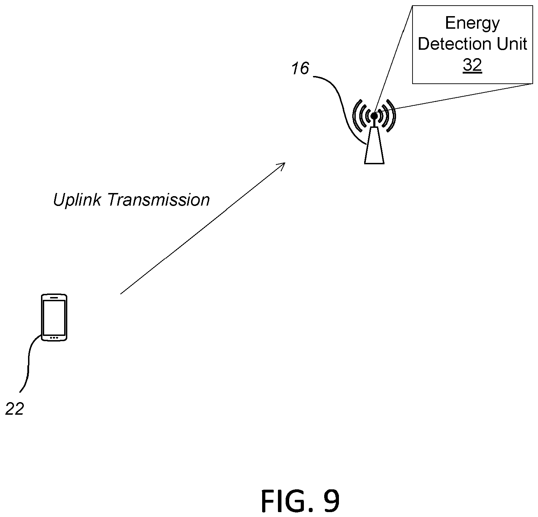

In an uplink grant-free transmission, the network node 16 may receive data over a physical uplink shared channel (PUSCH) according to the RRC configuration. In some embodiments of this disclosure, it is proposed that the network node 16 perform an energy detection process (in addition to the network node's 16 typical activities of decoding data in the PUSCH) over the assigned time-frequency resources for the WD's 22 configured grants. An example is shown in FIG. 9. FIG. 9 illustrates a schematic of an example energy detection scheme for an uplink grant-free transmission. In FIG. 9, the energy detector unit 32 in the network node 16 examines whether the energy level over the assigned resources is smaller than a pre-defined threshold value. If so, the network node 16 may assume Case 2 (e.g., WD 22 sent UL transmission on the assigned resources unsuccessfully). Thus, the network node 16 can send an energy level feedback to the WD 22 indicating e.g., the detected energy level. Otherwise (e.g., if the detected energy level meets or exceeds the pre-defined threshold value), the network node 16 may not send the energy feedback signal to the WD 22.

In some further embodiments, a timer may be defined for the energy level feedback. In some embodiments, the energy level feedback is required to be sent to the WD 22 before such timer expires. If no energy level feedback is sent to WD 22 before the timer expires, the WD 22 may assume Case 1 (e.g., network node 16 received and decoded uplink transmission successfully); thus an implicit ACK scheme can be used and the WD 22 can flush its buffer for the corresponding transport block. In some embodiments, if an energy level feedback is received by the WD 22 before the timer expires, the WD 22 may assume Case 2 and retransmit the UL transmission.

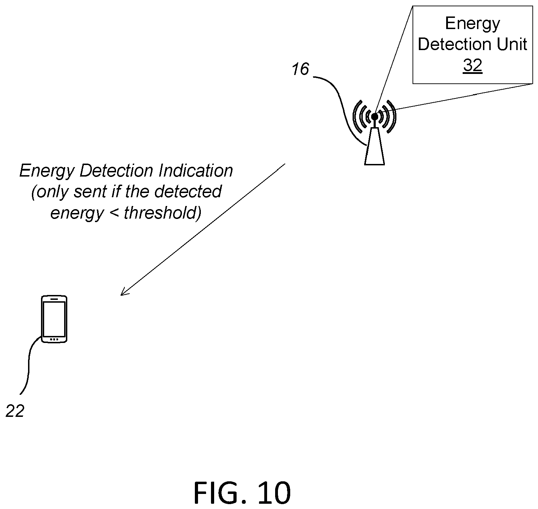

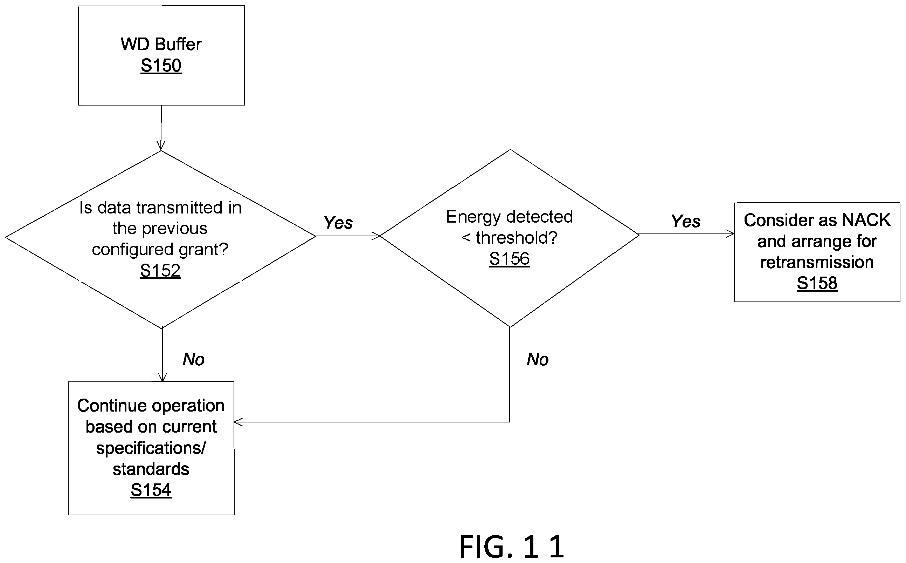

FIG. 10 illustrates an example of the WD 22 receiving the feedback (e.g., energy detection indication) from the network node 16 as a result of the detected energy being lower than the threshold. In some embodiments, since the WD 22 may know whether or not, in the previous transmission occasion, the WD 22 sent UL data, the WD 22 can interpret the received energy detector indicator as HARQ NACK or a normal incident. FIG. 11 illustrates an example flowchart of a WD 22 decision-making process based on the received signals from the network node 16. As shown in FIG. 11, there may be data in the WD 22 buffer (Block S150). The WD 22 may determine whether data was transmitted on the previous configured grant (Block S152). If no, operation may continue based on the current specification (Block S154). On the other hand, if yes (i.e., data was transmitted in the previous configured grant), the WD 22 may determine whether the energy detector signal is less than (or at most meets) a threshold (Block S156). If yes, the WD 22 may consider it a NACK and arrange for re-transmission of the contents of the buffer (Block S158). If no (e.g., the energy detector signal is more than (or at least meets) a threshold, the WD 22 may continue operation based on the current specification (e.g., in some embodiments, this may include flushing the buffer when the timer expires as described in the introduction section).

In one embodiment, the energy detection may be based on baseband signals and using a demodulation reference signal (DMRS) sequence detection. That is, the network node 16 may perform DMRS sequence detection assuming the WD 22 has transmitted PUSCH and associated DMRS according to its UL configured grant configuration. In another embodiment, the energy detection can be based on a radio frequency (RF) signal.

In some embodiments, the energy-detection indicator is sent in a group-common DCI to the WD 22. In some embodiments, the energy-detection indicator is a bitmap of Physical Resource Block (PRB) groups. In one example of such embodiments the PRBs may be divided into resource block groups (RBGs). In one example, an RBG may include a pair of adjacent PRBs, and the PRBs may be grouped into pairs of PRBs such as (PRB0, PRB1), (PRB2, PRB3), (PRB4, PRB5), (PRB6, PRB7), etc. In some embodiments, if the network node 16 does not detect energy in a set of PRBs, such as PRB4-PRB7, for a configured grant transmission opportunity, the network node 16 may transmit a bitmap or a sequence of bits (e.g., 0011000...). In some such embodiments, the group-common DCI may include and/or indicate, implicitly or explicitly, a time reference back in time relative to the time of reception of the group-common DCI. In other embodiments, when multiple configured grants are utilizing same or overlapping PRBs there may be more than one bitmap. For example, a first configured grant may use PRB2-PRB3 in a first part of a slot; while a second configured grant may also use PRB2-PRB3, but in a second part of a slot. In such examples the group-common DCI may comprise a first and second bitmap referencing a first and second part of a slot, respectively.

In one embodiment, for each WD 22 with an active UL configured grant (CG), the network node 16 may perform PUSCH detection according to each individual WD's 22 UL configured grant configuration, including cg-DMRS-Configuration, resourceAllocation, repK, periodicity, etc. In some embodiments, a WD 22 with an active UL configured grant may be denoted WD_A. The network node 16 may then perform energy detection according to the UL configured grant configuration of WD_A, for example, by sequence detection of DMRS according WD_A's cg-DMRS-Configuration, frequencyHopping, repK, etc. The energy detection may be performed for each occasion that the WD-A may transmit a TB associated with the CG. In some embodiments, the energy detection may be performed before the network node 16 performs demodulation and decoding of a potential TB carried by the PUSCH associated with the UL configured grant. In some embodiments, for occasion Tj that the WD-A may transmit a TB associated with the CG,
- If the energy detection indicates detected energy >= threshold_A, then the network node 16 considers that WD_A has transmitted a TB associated with the UL configured grant at occasion Tⱼ, and proceed to demodulation and decoding of the TB. The network node 16 does not send energy level feedback for occasion Tⱼ.
- If the energy detection indicates detected energy < threshold_A, then the network node 16 considers that WD_A did not transmit a TB associated with the UL configured grant at occasion Tⱼ. Hence, the network node 16 sends energy level feedback for occasion Tⱼ. The network node 16 does not proceed to demodulation and decoding of the TB.

In some embodiments, how to set the value of threshold_A for WD_A may be determined by the network node 16 implementation. According to the invention, the threshold A can be set considering the specific configuration of WD_A, for example, the DMRS configuration, antenna port configuration, PUSCH power control configuration of WD_A, etc. In some embodiments, the threshold_A can be the same as threshold_B of a different WD 22, WD_B, for example, when WD_A and WD_B have similar configurations. Alternatively, the threshold_A can be different from threshold_B WD_B, for example, when WD_A and WD_B have different DMRS configuration.

In some embodiments, the energy level feedback can be signaled (e.g., by network node 16) by setting fields of DCI format 0_0 to special values. In one example, the following setting of special fields may provide for the energy_detection indicator as follows, in Table 1:

**Table 1. DCI format for energy level feedback.**

| | **DCI format 0_0** | **Comment** |
|---|---|---|
| New data indicator | Set to '0' | This differentiates from activation/release DCI of Type 2 CG, which sets "new data indicator" to '1' |
| Frequency domain resource assignment | set to all '1's | Release DCI of Type 2 CG also sets "Frequency domain resource assignment" to all '1's |
| Time domain resource assignment | set to '1111' | This differentiates from activation/release DCI of Type 2 CG, which does not set "Time domain resource assignment" to special values |
| Redundancy version | set to '11' | This differentiates from activation/release DCI of Type 2 CG, which sets "redundancy version" to '00' |
| Modulation and coding scheme | set to all '1's | Release DCI of Type 2 CG also sets "Modulation and coding scheme" to all '1's |

Note that the "HARQ process number" field in DCI is shown set to the actual HARQ process number of the associated TB.

For the case where repK>1 is used, the WD 22 may be allowed to start PUSCH transmission at multiple slots for e.g., 3GPP Rel-15 (and possibly mini-slots for future releases). To be efficient with feedback transmission, the network node 16 may in some embodiments transmit only one energy_detection_indicator for each period, when the network node 16 has decided that WD 22 didn't transmit TB for the entire set of repK slots (or mini-slots).

If the techniques disclosed herein are applied to configured grant UL transmission with an aperiodic traffic nature, the indicator may be deactivated or may be sent in a less frequent manner. In one embodiment, the indicator may be sent only periodically with possibly a larger period than the configured grant UL period. In another embodiment, the indication may be deactivated when a condition is met, e.g., when a number of consecutive indication transmissions exceeds a certain threshold.

Once the indication is deactivated, it may be reactivated following certain condition, e.g.,
- when the network node 16 detects UL PUSCH transmission, or
- when the silent period reaches a configured deactivation limit. The silent period here may refer to a time duration starting from the latest deactivation instant.

In one embodiment, the usage of indication may be according to the indication state (e.g., activated or deactivated) configured in e.g., RRC. If the indication is set to activated, the techniques in this disclosure for energy detection feedback may be used; otherwise if deactivated no energy detection indication may be used.

In some embodiments, comparison operations for a threshold or threshold value may be indicated such as greater than, or less than, or equal to. It should be understood that different types of operations can be used in other embodiments to implement the techniques in this disclosure. For example, where one embodiment may include performing a particular action if a detected level is less than a threshold, another embodiment may include performing the particular action if a detected level is less than or equal to the threshold. Any such comparison operators may be used. Furthermore, in some embodiments, there may be more than one threshold, such as for example, a hierarchy of threshold levels, such as a first threshold level where one type of indicator is sent in one message and, for example, another threshold level that can be used to trigger yet another type of indicator or another type of message or even addition information in the message to be sent.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented in a network node (16), the method comprising: performing (S134) energy detection on assigned resources corresponding to a configured uplink grant for a wireless device (22), **WD,** wherein performing the energy detection on the assigned resources corresponding to the configured uplink grant further comprises one of:
performing a demodulation reference signal, **DMRS,** sequence detection on the assigned resources corresponding to the configured uplink grant, the DMRS sequence detection assuming that the wireless device has transmitted a transport block on a physical uplink shared channel and an associated **DMRS** according to the configured uplink grant; and
performing the energy detection on the assigned resources corresponding to the configured uplink grant on a physical uplink shared channel on which a transport block is transmitted by the wireless device, based on a radio frequency signal detected on the assigned resources corresponding to the configured uplink grant; and based on a level of the detected energy, one of:
when the level of the detected energy is less than a threshold, sending (S136) an energy detection indication corresponding to the assigned resources associated with the configured uplink grant, wherein as a result of sending the energy detection indication before a timer started when the transport block is sent on the physical uplink shared channel expires, receiving a retransmission of the transport block from the **WD** (22); and
when the level of the detected energy is at least equal to the threshold, demodulating and decoding the transport block associated with the configured uplink grant,
wherein the threshold is set considering the specific configuration of the **WD** (22), which configuration comprises one or more out of: DMRS configuration, antenna port configuration, PUSCH power control configuration of the **WD** (22).

2. The method of Claim 1, further comprising:
when the transport block is correctly decoded, using an implicit hybrid automatic repeat request, **HARQ,** acknowledgement, **ACK,** scheme; and
when the transport block is not correctly decoded, sending a dynamic grant for retransmission, wherein the dynamic grant for retransmission indicates to the wireless device (22) a hybrid automatic repeat request, **HARQ,** non-acknowledgement, **NACK,** for the transport block.

3. The method of any one of Claims 1-3, wherein sending the energy detection indication further comprises:
sending the energy detection indication in a downlink control information, **DCI,** message.

4. A method implemented in a wireless device (22), **WD,** the method comprising:
transmitting a transport block on a physical uplink shared channel, PUSCH, together with an associated demodulation reference signal, DMRS, according to a configured uplink grant;
receiving (S138) from a network node an energy detection indication corresponding to assigned resources associated with the configured uplink grant when the level of energy detected by the network node on the assigned resources corresponding to the configured grant is less than a threshold, wherein the threshold is set on the network node considering the specific configuration of the WD, the configuration comprising one or more out of DMRS configuration, antenna port configuration and PUSCH power control configuration of the WD;
the method further comprises:
determining (S140) whether to perform an uplink retransmission based at least in part on the received energy detection indication, wherein determining whether to perform the uplink retransmission based at least in part on the received energy detection indication further comprises:
when the energy detection indication is received before a timer started when the transport block is sent on the physical uplink shared channel expires, assuming hybrid automatic repeat request, **HARQ,** non-acknowledgement, NACK and performing the uplink retransmission of the transport block;
and when no energy detection indication is received before the timer expires, assuming an implicit HARQ acknowledgement, ACK.

5. The method of Claim 4, further comprising: determining (S152) whether data was transmitted in the assigned resources associated with the configured uplink grant, the uplink retransmission being conditioned on the data being transmitted in the assigned resources associated with the configured uplink grant.

6. The method of any one of Claims 4 and 5, wherein the energy detection indication indicates a level of energy detected on the assigned resources associated with the configured uplink grant relative to a predefined threshold.

7. The method of any one of Claims 4-6, further comprising:
when a dynamic grant for retransmission on resources associated with the configured uplink grant is received, retransmit on the resources based on the dynamic grant.

8. The method of any one of Claims 4-7, wherein the energy detection indication indicates to the **WD** (22) whether to retransmit data in a buffer.

9. The method of any one of Claims 4-8, , wherein receiving the energy detection indication further comprises:
receiving the energy detection indication in a downlink control information, DCI, message.

10. A network node (16) comprising a processing circuitry (68) and a memory, the network node being configured to execute the method according to claim 1.

11. A wireless device (22), WD, comprising a processing circuitry (84) and a memory, the wireless device being configured to execute the method according to claim 4.

## Patentansprüche

1. Verfahren, das in einem Netzwerkknoten (16) implementiert wird, wobei das Verfahren umfasst:
Durchführen (S134) von Energiedetektion an zugeordneten Ressourcen, die einer konfigurierten Uplink-Freigabe für eine drahtlose Vorrichtung, WD, (22) entsprechen, wobei das Durchführen der Energiedetektion an den zugeordneten Ressourcen, die der konfigurierten Uplink-Freigabe entsprechen, ferner eines von Folgendem umfasst:
Durchführen einer Demodulationsreferenzsignalfolgedetektion, DMRS-Folgedetektion, an den zugeordneten Ressourcen, die der konfigurierten Uplink-Freigabe entsprechen, wobei die DMRS-Folgedetektion voraussetzt, dass die drahtlose Vorrichtung einen Transportblock auf einem gemeinsamen physikalischen Uplink-Kanal und einem assoziierten DMRS gemäß der konfigurierten Uplink-Freigabe gesendet hat; und
Durchführen der Energiedetektion an den zugeordneten Ressourcen, die der konfigurierten Uplink-Freigabe entsprechen, auf einem gemeinsamen physikalischen Uplink-Kanal, auf dem von der drahtlosen Vorrichtung ein Transportblock gesendet wird, basierend auf einem Hochfrequenzsignal, das auf den zugeordneten Ressourcen, die der konfigurierten Uplink-Freigabe entsprechen, detektiert wird; und basierend auf einem Niveau der detektierten Energie eines von Folgendem:
wenn das Niveau der detektierten Energie unter einem Schwellenwert liegt, Senden (S136) einer Energiedetektionsanzeige, die den zugeordneten Ressourcen entspricht, die mit der konfigurierten Uplink-Freigabe assoziiert sind, wobei als Ergebnis des Sendens der Energiedetektionsanzeige, bevor ein Zeitgeber abläuft, der gestartet wurde, als der Transportblock auf dem gemeinsamen physikalischen Uplink-Kanal gesendet wurde, eine Neuübertragung des Transportblocks von der WD (22) empfangen wird; und
wenn das Niveau der detektierten Energie zumindest gleich dem Schwellenwert ist, Demodulieren und Decodieren des mit der konfigurierten Uplink-Freigabe assoziierten Transportblocks,
wobei der Schwellenwert unter Berücksichtigung der spezifischen Konfiguration der WD (22) eingestellt wird, wobei die Konfiguration eine oder mehrere von folgenden umfasst: eine DMRS-Konfiguration, eine Antennenanschlusskonfiguration, eine PUSCH-Leistungssteuerungskonfiguration der WD (22).

2. Verfahren nach Anspruch 1, ferner umfassend:
wenn der Transportblock korrekt decodiert wird, Verwenden eines Schemas einer impliziten Bestätigung, ACK, einer hybriden automatischen Wiederholungsanforderung, HARQ; und,
wenn der Transportblock nicht korrekt decodiert wird, Senden einer dynamischen Freigabe für Neuübertragung, wobei die dynamische Freigabe für Neuübertragung der drahtlosen Vorrichtung (22) eine Negativbestätigung, NACK, einer hybriden automatischen Wiederholungsanforderung, HARQ, für den Transportblock anzeigt.

3. Verfahren nach einem der Ansprüche 1 bis 3, wobei das Senden der Energiedetektionsanzeige ferner umfasst:
Senden der Energiedetektionsanzeige in einer Downlink-Steuerinformationsnachricht, DCI-Nachricht.

4. Verfahren, das in einer drahtlosen Vorrichtung, WD, (22) implementiert wird, wobei das Verfahren umfasst:
Senden eines Transportblocks auf einem gemeinsamen physikalischen Uplink-Kanal, PUSCH, zusammen mit einem assoziierten Demodulationsreferenzsignal, DMRS, gemäß einer konfigurierten Uplink-Freigabe;
Empfangen (S138) einer Energiedetektionsanzeige von einem Netzwerkknoten, die zugeordneten Ressourcen entspricht, die mit der konfigurierten Uplink-Freigabe assoziiert sind, wenn das Niveau der Energie, die durch den Netzwerkknoten an den zugeordneten Ressourcen detektiert wird, die der konfigurierten Freigabe entsprechen, unter einem Schwellenwert liegt, wobei der Schwellenwert am Netzwerkknoten unter Berücksichtigung der spezifischen Konfiguration der WD eingestellt wird, wobei die Konfiguration eine oder mehrere von einer DMRS-Konfiguration, einer Antennenanschlusskonfiguration und einer PUSCH-Leistungssteuerungskonfiguration der WD umfasst;
wobei das Verfahren ferner umfasst:
Bestimmen (S140) zumindest teilweise basierend auf der empfangenen Energiedetektionsanzeige, ob eine Uplink-Neuübertragung durchgeführt werden soll, wobei das Bestimmen zumindest teilweise basierend auf der empfangenen Energiedetektionsanzeige, ob eine Uplink-Neuübertragung durchgeführt werden soll, ferner umfasst:
wenn die Energiedetektionsanzeige empfangen wird, bevor ein Zeitgeber abläuft, der gestartet wurde, als der Transportblock auf dem gemeinsamen physikalischen Uplink-Kanal gesendet wurde, Voraussetzen einer Negativbestätigung, NACK, einer hybriden automatischen Wiederholungsanforderung, HARQ, und Durchführen der Uplink-Neuübertragung des Transportblocks; und,
wenn keine Energiedetektionsanzeige empfangen wird, bevor der Zeitgeber abläuft, Voraussetzen einer impliziten HARQ-Bestätigung, ACK.

5. Verfahren nach Anspruch 4, ferner umfassend:
Bestimmen (S152), ob Daten in den zugeordneten Ressourcen gesendet wurden, die mit der konfigurierten Uplink-Freigabe assoziiert sind, wobei die Uplink-Neuübertragung davon abhängig gemacht wird, dass die Daten in den zugeordneten Ressourcen gesendet werden, die mit der konfigurierten Uplink-Freigabe assoziiert sind.

6. Verfahren nach einem der Ansprüche 4 und 5, wobei die Energiedetektionsanzeige ein Niveau von Energie, die an den zugeordneten Ressourcen detektiert wird, die mit der konfigurierten Uplink-Freigabe assoziiert sind, relativ zu einer vordefinierten Schwelle anzeigt.

7. Verfahren nach einem der Ansprüche 4 bis 6, ferner umfassend:
wenn eine dynamische Freigabe für Neuübertragung auf Ressourcen, die mit der konfigurierten Uplink-Freigabe assoziiert sind, empfangen wird, erneutes Senden auf den Ressourcen basierend auf der dynamischen Freigabe.

8. Verfahren nach einem der Ansprüche 4 bis 7, wobei die Energiedetektionsanzeige der WD (22) anzeigt, ob Daten in einem Puffer erneut gesendet werden.

9. Verfahren nach einem der Ansprüche 4 bis 8, wobei das Empfangen der Energiedetektionsanzeige ferner umfasst:
Empfangen der Energiedetektionsanzeige in einer Downlink-Steuerinformationsnachricht, DCI-Nachricht.

10. Netzwerkknoten (16), umfassend eine Verarbeitungsschaltungsanordnung (68) und einen Speicher, wobei der Netzwerkknoten zum Ausführen des Verfahrens nach Anspruch 1 konfiguriert ist.

11. Drahtlose Vorrichtung (22), umfassend eine Verarbeitungsschaltungsanordnung (84) und einen Speicher, wobei die drahtlose Vorrichtung zum Ausführen des Verfahrens nach Anspruch 4 konfiguriert ist.

## Revendications

1. Procédé mis en oeuvre dans un noeud de réseau (16), le procédé comprenant :
la réalisation (S134) d'une détection d'énergie sur des ressources attribuées correspondant à un octroi de liaison montante configuré pour un dispositif sans fil (22), WD, dans lequel la réalisation de la détection d'énergie sur les ressources attribuées correspondant à l'octroi de liaison montante configuré comprend en outre l'une parmi :
la réalisation d'une détection de séquence de signal de référence de démodulation, DMRS, sur les ressources attribuées correspondant à l'octroi de liaison montante configuré, la détection de séquence DMRS supposant que le dispositif sans fil a transmis un bloc de transport sur un canal partagé de liaison montante physique et un DMRS associé en fonction de l'octroi de liaison montante configuré ; et
la réalisation de la détection d'énergie sur les ressources attribuées correspondant à l'octroi de liaison montante configuré sur un canal partagé de liaison montante physique sur lequel un bloc de transport est transmis par le dispositif sans fil, sur la base d'un signal de radiofréquences détecté sur les ressources attribuées correspondant à l'octroi de liaison montante configuré ; et sur la base d'un niveau de l'énergie détectée, l'un parmi :
lorsque le niveau de l'énergie détectée est inférieur à un seuil, l'envoi (S136) d'une indication de détection d'énergie correspondant aux ressources attribuées associées à l'octroi de liaison montante configuré, dans lequel, à la suite de l'envoi de l'indication de détection d'énergie avant l'expiration d'une minuterie démarrée lorsque le bloc de transport est envoyé sur le canal partagé de liaison montante physique, la réception d'une retransmission du bloc de transport depuis le WD (22) ; et
lorsque le niveau de l'énergie détectée est au moins égal au seuil, la démodulation et le décodage du bloc de transport associé à l'octroi de liaison montante configuré,
dans lequel le seuil est défini en tenant compte de la configuration spécifique du WD (22), laquelle configuration comprend une ou plusieurs parmi : une configuration DMRS, une configuration de port d'antenne, et une configuration de commande de puissance PUSCH du WD (22).

2. Procédé selon la revendication 1, comprenant en outre :
lorsque le bloc de transport est correctement décodé, l'utilisation d'un schéma d'accusé de réception, ACK, de demande de répétition automatique hybride, HARQ, implicite ; et
lorsque le bloc de transport n'est pas correctement décodé, l'envoi d'un octroi dynamique de retransmission, dans lequel l'octroi dynamique de retransmission indique, au dispositif sans fil (22), un accusé de réception négatif, NACK, de demande de répétition automatique hybride, HARQ, pour le bloc de transport.

3. Procédé selon l'une quelconque des revendications 1 à 3, dans lequel l'envoi de l'indication de détection d'énergie comprend en outre :
l'envoi de l'indication de détection d'énergie dans un message d'informations de commande de liaison descendante, DCI.

4. Procédé mis en oeuvre dans un dispositif sans fil (22), WD, le procédé comprenant :
la transmission d'un bloc de transport sur un canal partagé de liaison montante physique, PUSCH, conjointement avec un signal de référence de démodulation, DMRS, associé en fonction d'un octroi de liaison montante configuré ;
la réception (S138), depuis un noeud de réseau, d'une indication de détection d'énergie correspondant aux ressources attribuées associées à l'octroi de liaison montante configuré lorsque le niveau de l'énergie détectée par le noeud de réseau sur les ressources attribuées correspondant à l'octroi configuré est inférieur à un seuil, dans lequel le seuil est défini sur le noeud de réseau en tenant compte de la configuration spécifique du WD, la configuration comprenant une ou plusieurs parmi : une configuration DMRS, une configuration de port d'antenne, et une configuration de commande de puissance PUSCH du WD ;
le procédé comprend en outre :
la détermination (S140) s'il faut ou non réaliser une retransmission de liaison montante sur la base au moins en partie de l'indication de détection d'énergie reçue, dans lequel la détermination s'il faut ou non réaliser la retransmission de liaison montante sur la base au moins en partie de l'indication de détection d'énergie reçue comprend en outre :
lorsque l'indication de détection d'énergie est reçue avant l'expiration d'une minuterie démarrée lorsque le bloc de transport est envoyé sur le canal partagé de liaison montante physique, la supposition d'un accusé de réception négatif, NACK, de demande de répétition automatique hybride, HARQ, et la réalisation de la retransmission de liaison montante du bloc de transport ; et
lorsque aucune indication de détection d'énergie n'est reçue avant l'expiration de la minuterie, la supposition d'un accusé de réception, ACK, de HARQ implicite.

5. Procédé selon la revendication 4, comprenant en outre :
la détermination (S152) si des données ont été ou non transmises dans les ressources attribuées associées à l'octroi de liaison montante configuré, la retransmission de liaison montante étant conditionnée au fait que les données sont transmises dans les ressources attribuées associées à l'octroi de liaison montante configuré.

6. Procédé selon la revendication 4 et 5, dans lequel l'indication de détection d'énergie indique un niveau de l'énergie détectée sur les ressources attribuées associées à l'octroi de liaison montante configuré par rapport à un seuil prédéfini.

7. Procédé selon l'une quelconque des revendications 4 à 6, comprenant en outre :
lorsqu'un octroi dynamique de retransmission sur des ressources associées à l'octroi de liaison montante configuré est reçu, la retransmission sur les ressources sur la base de l'octroi dynamique.

8. Procédé selon l'une quelconque des revendications 4 à 7, dans lequel l'indication de détection d'énergie indique, au WD (22), s'il faut ou non retransmettre des données dans une mémoire tampon.

9. Procédé selon l'une quelconque des revendications 4 à 8, dans lequel la réception de l'indication de détection d'énergie comprend en outre :
la réception de l'indication de détection d'énergie dans un message d'informations de commande de liaison descendante, DCI.

10. Noeud de réseau (16) comprenant une circuiterie de traitement (68) et une mémoire, le noeud de réseau étant configuré pour exécuter le procédé selon la revendication 1.

11. Dispositif sans fil (22), WD, comprenant une circuiterie de traitement (84) et une mémoire, le dispositif sans fil étant configuré pour exécuter le procédé selon la revendication 4.
